# EUROPÄISCHE PATENTSCHRIFT

(11) **EP 0 377 176 B1**
(45) Veröffentlichungstag und Bekanntmachung des Hinweises auf die Patenterteilung: **10.02.1993**
(21) Anmeldenummer: 89123674.7
(22) Anmeldetag: 21.12.1989
(51) Int. Cl.: G21C 11/02

(54) **Absorptionsmantel für eine radioaktive Strahlungsquelle, insbesondere einen Kernreaktor**
Absorber coat for a radioactive source, especially a nuclear reactor
Enveloppe d'absorption pour une source radioactive, notamment un réacteur nucléaire

(30) Priorität: 31.12.1988 DE 3844466; 30.08.1989 DE 3928711
(43) Veröffentlichungstag der Anmeldung: 11.07.1990
(73) Patentinhaber: Hösgen, Karlheinz, D-53894 Mechernich (DE)
(72) Erfinder: Hösgen, Karlheinz, D-53894 Mechernich (DE)
(74) Vertreter: Selting, Günther, Dipl.-Ing.

(56) Entgegenhaltungen:
- EP-A- 0 057 867
- FR-A- 2 188 249
- GB-A- 882 031
- US-A- 2 983 821
- US-A- 3 016 463

## Beschreibung

Die Erfindung betrifft einen Absorptionsmantel für eine radioaktive Strahlungsquelle, insbesondere einen Kernreaktor, mit einer ersten Schicht zur Absorption von Gammastrahlung und einer zweiten Schicht zur Absorption von Neutronenstrahlung.

Um bei Kernreaktoren ein Austreten radioaktiver Direktstrahlung und radioaktiver Spaltprodukte zu verhindern, sind mehrere Sicherheitsvorkehrungen vorgesehen. Beispielsweise verringert in einem Kernkraftwerk das Reaktordruckgefäß, bei dem es sich um einen Stahlbehälter handelt, die Gammastrahlung. Das Reaktordruckgefäß ist von einem zwei Meter dicken Schild aus Stahlbeton umgeben, der für eine weitere Abschirmung der verbleibenden Gammastrahlung und der Neutronenstrahlung sorgt. Weitere Barrieren gegen das Austreten radioaktiver Strahlung sind der Sicherheitsbehälter aus Beton mit Dichthaut und das Reaktorgebäude. Zur Abschirmung des Reaktors sind also mehrere relativ dicke Wände erforderlich. In ihrer Summe sorgen all diese Barrieren dafür, daß außerhalb des Reaktors direkte Strahlung nur noch in vertretbarem Maße austreten. Versagt eine dieser Schutzbarrieren infolge von Undichtigkeit, ist ein sicherer Schutz gegen das Austreten der radioaktiven Strahlung nicht mehr gegeben. Ein zuverlässiger Schutz gegen die bei einer Kernreaktion entstehenden radioaktiven gasförmigen Spaltprodukte ist nicht gegeben.

Aus GB-A-882 031 ist eine Strahlungsabschirmung für Nuklear-Reaktoren bekannt, die eine erste Schicht zur Absorption von Gammastrahlung und eine zweite Schichtanordnung zur Absorption von Neutronenstrahlung aufweist. Auf die zweite Schicht folgt eine dritte Schicht wiederum zur Absorption von Gammastrahlung. Die von den beiden Gammastrahlungs-Absorptionsschichten eingeschlossene zweite Schichtanordnung besteht aus zwei Teilschichten, von denen die eine der Absorption thermischer Neutronen und die andere der Absorption schneller Neutronen dient.

Aus US-A-2 983 821 ist eine Schutzvorrichtung zum Schutz gegen durch ABC-Waffen hervorgerufenen Verletzungen bekannt. Der Schichtenaufbau dieser Schutzvorrichtung weist u.a. eine Schicht aus gasundurchlässigem Material auf.

Der Erfindung liegt die Aufgabe zugrunde, einen Absorptionsmantel für die radioaktive Strahlungsquelle zu schaffen, der einen sicheren Schutz gegen das Eindringen oder Austreten radioaktiver Spaltprodukte darstellt.

Als Lösung dieser Aufgabe wird mit der Erfindung vorgeschlagen, eine dritte Schicht zur Absorption von Alpha- und Betastrahlung und eine gasundurchlässige vierte Schicht aus einer Zirkoniumlegierung vorzusehen, die die radioaktive Strahlungsquelle allseitig umgibt und die gasförmigen Spaltprodukte zurückhält.

Nach der Erfindung wird die radioaktive Strahlungsquelle neben einer dritten Schicht zur Absorption von Alpha- und Betastrahlung vollständig von einer gasundurchlässigen Materialschicht umgeben. Diese vierte Schicht sorgt für eine vollständige Abkapselung der radioaktiven Strahlungsquelle. Die gasförmigen Spaltprodukte können also nicht austreten und bleiben innerhalb des von der vierten Schicht umschlossenen Raumes. Die gasförmigen Spaltprodukte können demzufolge nicht in die übrigen Schichten zur Absorption der unterschiedlichen Strahlungen eindringen und diese verseuchen. Die Abschirmung der radioaktiven Strahlungsquelle in Bezug auf die radioaktiven Spaltprodukte ermöglicht das kontrollierte Abführen dieser bei der Kernreaktion entstehenden gasförmigen Stoffe, ohne daß andere Schutzbarrieren verseucht werden.

Erfindungsgemäß besteht die vierte Schicht aus einer Zirkoniumlegierung. Die Zirkoniumlegierungsschicht sorgt bereits bei einer relativ geringen Stärke für eine zuverlässige Abschirmung der Umgebung der radioaktiven Strahlungsquelle in Bezug auf die gasförmigen Spaltprodukte.

Die Reihenfolge der einzelnen Schichten ist prinzipiell beliebig; die vierte Schicht aus gasundurchlässigem Material sollte jedoch die zur Strahlungsquelle nächstliegende sein, um die weiteren Schichten vor einer Durchdringung mit gasförmigen Spaltprodukten zu schützen.

Vorteilhafterweise besteht die erste Schicht zur Absorption der Gammastrahlung aus Blei, die zweite Schicht zur Absorption der Neutronenstrahlung aus Bor, Hafnium, Cadmium oder Beryllium und die dritte Schicht zur Absorption der Alpha- und Betastrahlung aus Aluminium. Zur wirkungsvollen Absorption der radioaktiven Strahlung bzw. zur Abschirmung der radioaktiven gasförmigen Spaltprodukte braucht der Absorptionsmantel lediglich eine relativ geringe Dicke zu haben, da die einzelnen Schichten bereits bei einer relativ geringen Stärke eine wirkungsvolle Strahlungsabsorption bzw. Abschirmung gegen radioaktive Stoffe bieten. Mit der erfindungsgemäßen Schichtenfolge werden die radioaktiven Strahlen (Alpha-, Beta-, Gamma- und Neutronenstrahlung) wirkungsvoll absorbiert. Die Dicke der einzelnen Schichten hängt im wesentlichen von der Strahlungsintensität ab. Die Blei-Schicht sollte etwa dreimal so stark sein wie jede andere Schicht. Mit dem erfindungsgemäßen Strahlen- und Spaltproduktabsorptionsmantel wird die Umgebung von Anlagen mit Kernreaktoren zuverlässig geschützt. Die Erfindung trägt damit entscheidend zum Schutz der Umwelt gegen radioaktive Verseuchung bei.

Zur Absicherung von Kernkraftwerken mit Leichtwasserreaktoren reichen die oben genannten vier Schichten aus. Bei "schnellen Brütern" oder "schnellen Brutreaktoren", bei denen bei der Kernspaltung Plutonium erzeugt wird, ist es zweckmäßig, eine fünfte Schicht aus Titan vorzusehen. Diese Titanschicht absorbiert die vom Plutonium ausgehende radioaktive Strahlung besonders wirkungsvoll.

Vorteilhafterweise sind sämtliche Schichten im Abstand zueinander angeordnet, um die unterschiedliche Ausdehnung der einzelnen Schichten bei Erwärmung zu ermöglichen. Zwischen den einzelnen Schichten können Abstandshalter angeordnet sein; vorteilhafterweise befindet sich zwischen jeweils zwei benachbarten Schichten eine Schicht aus elastischem Material, die die unterschiedliche Ausdehnung benachbarter Schichten kompensiert.

Der erfindungsgemäße Absorptionsmantel kann zur Auskleidung von Kernkraftwerken, Transportbehältern für radioaktive Stoffe, Zwischen- und Endlagerungsstätten für radioaktiven Abfall, Kernbrennstoff-Verarbeitungsanlagen und Wiederaufbereitungsanlagen verwendet werden. Ferner ist der Absorptionsmantel auch als Ummantelung von atomaren Satellitenantrieben, als Auskleidung von Röntgenräumen und Laboratorien verwendbar. Schließlich lassen sich mit dem Absorptionsmantel nach der Erfindung auch Zivilschutzräume, Produktionsstätten oder militärische Einrichtungen gegen radioaktive Strahlung und Stoffe sichern.

Zur Absicherung des Reaktors eines Kernkraftwerks wird der erfindungsgemäße Absorptionsmantel vorteilhafterweise sowohl auf der Innenseite des Reaktorgebäudes als auch auf der Innenseite des innerhalb des Gebäudes angeordneten Reaktorsicherheitsbehälters angeordnet. In beiden Fällen ist die Zirkoniumlegierungsschicht die zum Reaktorkern nächstliegende Schicht. Eine weitere Möglichkeit der Absicherung des Reaktors besteht darin, die Schichtenfolge in die Wandung des Reaktorgebäudes und des Reaktorsicherheitsbehälters zu integrieren, wobei auch hier die vierte (Zirkoniumlegierungs-) Schicht jeweils die innerste ist. Die Anordnung der Schichtenfolge jeweils am Reaktorgebäude und am Sicherheitsbehälter bzw. jeweils in deren Wänden stellt eine doppelte Absicherung des Reaktors dar. Der Absorptionsmantel am Reaktorgebäude bzw. in dessen Wand sorgt selbst bei einem sogenannte GAU (größter anzunehmender Unfall), bei dem der Reaktorkern und im weiteren Verlauf die Betonhülle des Sicherheitsbehälters schmilzt, bis zur Zerstörung des Sicherheitsbehälters für einen zuverlässigen Schutz vor radioaktiver Strahlung und radioaktiven Stoffen.

Zur Entsorgung stillgelegter Kernkraftwerke läßt sich der erfindungsgemäße Absorptionsmantel ebenfalls verwenden. Hierbei wird der Absorptionsmantel vorteilhafterweise um das gesamte Reaktorgebäude gelegt. Dies kann insbesondere dadurch erfolgen, daß die Schichtenfolge von außen an dem Reaktorgebäude angebracht wird, wobei die Zirkoniumlegierungsschicht auf der dem Reaktorgebäude zugewandten Innenseite des Absorptionsmantels angeordnet ist. Zur Absicherung von Endlagerungsstätten wird der Absorptionsmantel vorteilhafterweise um die gesamte Endlagerungsstätte herum angeordnet. Auch hier befindet sich die Zirkoniumlegierungsschicht auf der Innenseite des Absorptionsmantels.

Je nach der Stärke der abzuschirmenden radioaktiven Strahlung kann es auch ausreichend sein, lediglich die Zugänge zur Endlagerungsstätte mit dem Absorptionsmantel zu verschließen. Schließlich eignet sich der erfindungsgemäße Absorptionsmantel auch zum Schutz von Einrichtungen sämtlicher Art gegen radioaktive Strahlung und Stoffe; hierbei befindet sich die Zirkoniumlegierungsschicht auf der Außenseite des um die zu schützende Einrichtung herumgelegten Absorptionsmantels.

Mit dem erfindungsgemäßen Absorptionsmantel ist die Entsorgung stillgelegter Kernkraftwerke durch den "gesicherten Einschluß" des Kernkraftwerks möglich. Bei dieser Variante der Entsorgung werden alle festen und nicht löslichen aktiven Substanzen durch eine dichte Sicherheitsumhüllung am Standort langzeitig eingeschlossen. Die sicherheitstechnische Überwachung sowie gefahrlose Begehung der stillgelegten Anlage sind während der gesamten Einschlußzeit gewährleistet. Die Anlage kann nach wie vor begangen werden und eine Überwachung mit Meßgeräten u.dgl. ist jederzeit möglich. Die Strahlenbelastungen des "gesichert eingeschlossenen" stillgelegten Kernkraftwerks werden durch den erfindungsgemäßen Absorptionsmantel wesentlich herabgesetzt. Der komplette Einschluß des stillgelegten Kernkraftwerks mittels einer mit dem Absorptionsmantel versehenen Sicherheitsumhüllung stellt eine im Vergleich zu anderen Entsorgungsmaßnahmen relativ kostengünstige Lösung dar.

Nachfolgend wird anhand der Figuren ein Ausführungsbeispiel der Erfindung näher erläutert. Im einzelnen zeigen:
Fig. 1 schematisch den Reaktorkern und die wesentlichen Bestandteile zur Sicherung des Reaktors gegen das Austreten radioaktiver Strahlung und radioaktiver Stoffe und
Fig. 2 in vergrößerter Darstellung die Anordnung des Absorptionsmantels auf der Innenseite der Reaktorgebäudewand.

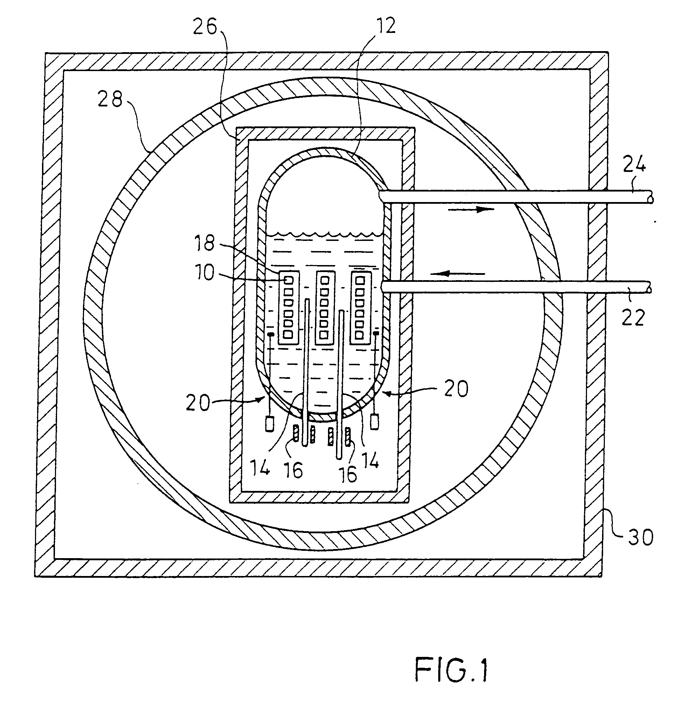

In Fig. 1 sind schematisch die wesentlichen Elemente gegen das Austreten radioaktiver Strahlung und Stoffe am Beispiel eines Siedewasserreaktors dargestellt. Die Brennelemente 10, die jeweils aus mehreren Brennstäben zusammengesetzt sind, sind in einem zu etwa 2/3 mit Wasser gefülltem Reaktordruckgefäß 12 angeordnet. Das Reaktordruckgefäß 12 besteht aus einem Spezialstahl und weist eine Wandstärke von etwa 20 cm auf. Zur Regelung des Reaktorkerns, d.h. zur Regelung der Kernspaltung sind im Reaktordruckgefäß 12 mehrere sogenannte Regelstäbe 14 vorgesehen, die zwischen den Brennelementen 10 angeordnet und über außerhalb des Reaktordruckgefäßes 12 befindliche Antriebe 16 längsverschiebbar sind. Die Brennelemente 10 weisen eine Umhüllung 18 auf. Ferner sind im Reaktordruckgefäß 12 Umwälzpumpen 20 zum Umwälzen des Wassers vorgesehen. An dem Reaktordruckgefäß 12 sind eine Wasserzulaufleitung 22 und eine Dampfabführleitung 24 angeschlossen. Das vom Kondensator kommende Wasser fließt über die Leitung 22 in das Reaktordruckgefäß 12 hinein, wird in diesem infolge der bei der Kernspaltung freiwerdenden Energie erhitzt, wobei es verdampft. Der Dampf tritt über die Leitung 24 aus dem Reaktordruckgefäß 12 heraus und gelangt zu den Turbinen.

Das Reaktordruckgefäß 12 ist von einer etwa zwei Meter starken Betonhülle 26 umgeben, die auch als biologischer Schild bezeichnet wird. Reaktordruckgefäß und dessen Betonumhüllung sind in einem Sicherheitsbehälter aus Stahl untergebracht, dessen Wandstärke ca. 3 cm beträgt. Der Sicherheitsbehälter 28 ist außen mit einer Dichthaut von ca. 4 mm Wandstärke versehen. Der Sicherheitsbehälter 28 ist innerhalb des Reaktorgebäudes 30 angeordnet. Das Reaktorgebäude besteht aus Stahlbeton und schützt vor allem gegen äußere Einwirkungen.

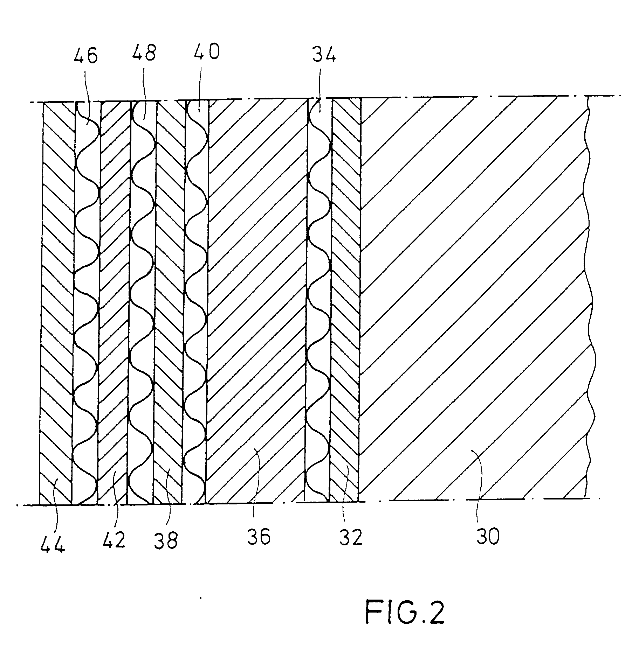

Der erfindungsgemäße Absorptionsmantel ist jeweils auf der Innenseite des Sicherheitsbehälters 28 und des Reaktorgebäudes 30 angeordnet. Der Absorptionsmantel besteht aus mehreren Schichten. Der Aufbau und die Schichtenfolge werden nachfolgend anhand des auf der Innenseite des Reaktorgebäude 30 angeordneten Absorptionsmantels beschrieben (Fig. 2). Auf die Innenfläche der Wand des Reaktorgebäudes 30 ist eine Schicht 32 aus Titan aufgebracht. Diese Titan-Schicht 32 soll die radioaktive Strahlung von Plutonium absorbieren, ist also nur bei schnellen Brutreaktoren, bei deren Kernspaltung Plutonium anfällt, erforderlich. Dennoch ist die Titan-Schicht 32 in Fig. 2 der Vollständigkeit halber eingezeichnet. Auf der Titan-Schicht befindet sich eine Schicht 34 aus einem elastischen Material, über der eine dicke Blei-Schicht 36 angeordnet ist. Die Blei-Schicht 36 dient zur Absorption der Gammastrahlung. Vom Reaktorkern aus betrachtet, befindet sich vor der Blei-Schicht 36 eine Schicht 38 aus Cadmium, Bor, Hafnium oder Beryllium zur Absorption der Neutronenstrahlung. Der Zwischenraum zwischen der Schicht 38 und der Blei-Schicht 36 ist durch eine Schicht 40 aus elastischem Material ausgefüllt. Im Abstand zur Schicht 38 befindet sich eine Schicht 42 aus Aluminium, die die Alpha- und Beta-Strahlung absorbiert. Auf der der Schicht 38 abgewandten Innenseite der Aluminium-Schicht 42 ist schließlich eine Schicht 44 aus einer Zirkoniumlegierung vorgesehen. Die Zirkoniumlegierungs-Schicht 44 verhindert das Austreten gasförmiger Spaltprodukte und weist als auf der Innenseite des Absorptionsmantels angeordnete innerste Schicht den geringsten Abstand zum Kernreaktor auf. Der Zwischenraum zwischen der Zirkoniumlegierungs-Schicht 44 und der Aluminium-Schicht 42 sowie der Zwischenraum zwischen der Aluminium-Schicht 42 und der Schicht 38 ist jeweils mit elastischem Material 46 bzw. 48 ausgefüllt.

Die einzelnen Schichten 42-44 sind aus einzelnen Plattenelementen zusammengesetzt. Die Platten einer Schicht sind untereinander verschraubt; die Platten unterschiedlicher Schichten sind ebenfalls miteinander verschraubt. Das elastische Material der Schichten 34,40,46 und 48 kompensiert die mechanischen Spannungen in dem Absorptionsmantel infolge der unterschiedlich starken Ausdehnung und Schrumpfung der Schichten bei Erwärmung bzw. Abkühlung.

Der erfindungsgemäße Absorptionsmantel kann auch aus selbsttragenden Schichten bestehen. In diesem Fall würden die Zirkoniumlegierungs-Schicht 44, die Aluminium-Schicht 42, die Cadmium-, Bor-, Hafnium- oder Beryllium-Schicht 38, die Blei-Schicht 36 und gegebenenfalls die Titan-Schicht 32 in gegenseitigem Abstand zueinander angeordnet werden; die Zwischenräume können in diesem Fall im wesentlichen materialfrei bleiben, so daß auf die Schichten aus elastischem Material verzichtet werden kann. Anstelle dieser Schichten 34,40,46 und 48 aus elastischem Material können verformbare Abstandshalter verwendet werden, die an den Schichten, zwischen denen sie angeordnet sind, befestigt werden.

Wie bereits oben erwähnt, besteht die innerste Schicht 44 aus einer Zirkoniumlegierung. Als Material für die Schicht 44 kommt insbesondere Zircaloy in Frage (Zircaloy ist ein eingetragenes Warenzeichen). Aber auch jede andere Zirkoniumlegierung, die einen sicheren Schutz gegen gasförmige Spaltprodukte bietet, ist als Material für die Schicht 44 verwendbar. Die Dicke der einzelnen Schichten zum Absorbieren der Alpha-, Beta-, Gamma- und Neutronenstrahlung sowie zum Abdichten des Absorptionsmantels gegen gasförmige Spaltprodukte hängt von der Strahlungsintensität ab. Bezüglich der Dicke der einzelnen Schichten relativ zueinander ist zu sagen, daß die Zirkoniumlegierungs-Schicht 44, die Aluminium-Schicht 42, die Schicht 38 aus Cadmium, Bor, Hafnium oder Beryllium und die Titan-Schicht 32 in etwa gleich dick sind, während die Blei-Schicht 36 in etwa dreimal so dick ist wie jede der zuvor aufgeführten Schichten. Die Relation der einzelnen Schichten bezüglich ihrer Dicke ist in Fig. 2 zeichnerisch wiedergegeben; bei dieser Darstellung kann die Stahlbetonwand des Reaktorgebäudes 30, die ca. 1,50 m dick ist, nur noch teilweise dargestellt werden.

## Patentansprüche

1. Absorptionsmantel für eine radioaktive Strahlungsquelle, insbesondere einen Kernreaktor, mit einer ersten Schicht (36) zur Absorption von Gammastrahlung und einer zweiten Schicht (38) zur Absorption von Neutronenstrahlung,
**gekennzeichnet durch**
- eine dritten Schicht (42) zur Absorption von Alpha- und Betastrahlung und
- eine die radioaktive Strahlungsquelle allseitig umgebende gasundurchlässige vierte Schicht (44) aus einer Zirkoniumlegierung zum Zurückhalten gasförmiger Spaltprodukte.

2. Mantel nach Anspruch 1, dadurch gekennzeichnet, daß die zweite Schicht (38) aus Hafnium besteht.

3. Mantel nach Anspruch 1 oder 2, dadurch gekennzeichnet, daß eine fünfte Schicht aus Titan vorgesehen ist.

4. Mantel nach einem der Ansprüche 1 bis 3, dadurch gekennzeichnet, daß sämtliche Schichten (32,36,38, 42,44) im Abstand zueinander angeordnet sind.

5. Mantel nach Anspruch 4, dadurch gekennzeichnet, daß zwischen benachbarten Schichten (32,36,38,42, 44) jeweils eine Schicht (34,40,46,48) aus elastischem Material angeordnet ist.

6. Verwendung des Absorptionsmantels nach einem der Ansprüche 1 bis 5 zur Absicherung des Reaktors eines Kernkraftwerks, dadurch gekennzeichnet, daß die Schichten (32,36,38,42,44) auf der Innenseite des Reaktorgebäudes (30) und/oder auf der Innenseite des in diesem vorgesehenen Reaktorsicherheitsbehälters (28) angeordnet sind, wobei die vierte Schicht (44) jeweils die innerste ist.

7. Verwendung des Absorptionsmantels nach einem der Ansprüche 1 bis 5 zur Absicherung des Reaktors eines Kernkraftwerks, dadurch gekennzeichnet, daß die Schichten in der Wand des Reaktorgebäudes (30) und/oder der Wand des Reaktorsicherheitsbehälters (28) integriert sind, wobei die vierte Schicht (44) jeweils die innerste ist.

8. Verwendung des Absorptionsmantels nach einem der Ansprüche 1 bis 5 zur Entsorgung von stillgelegten Kernkraftwerken, dadurch gekennzeichnet, daß der Absorptionsmantel um das Reaktorgebäude (30) gelegt wird, wobei die vierte Schicht (44) auf der dem Reaktorgebäude (30) zugewandten Innenseite angeordnet ist.

9. Verwendung des Absorptionsmantels nach einem der Ansprüche 1 bis 5 zum Schutz von Einrichtungen gegen radioaktive Strahlung, dadurch gekennzeichnet, daß der Absorptionsmantel um die zu schützende Einrichtung gelegt wird, wobei die vierte Schicht (44) auf der der Einrichtung abgewandten Außenseite angeordnet ist.

## Claims

1. An absorption shell for a source of radioactive radiation, particularly for a nuclear reactor, having a first layer (36) for the absorption of gamma radiation, and a second layer (38) for the absorption of neutron radiation,
**characterized by**
a third layer (42) for the absorption of alpha and beta radiation, and
a gas-impermeable fourth layer (44) of a zirconium alloy, enclosing the source of radioactive radiation from all sides, for retaining gaseous fission products.

2. The shell according to claim 1 characterized in that the second layer (38) consists of hafnium.

3. The shell according to claim 1 or 2 characterized in that there is provided a fifth layer consisting of titanium.

4. The shell according to any one of claims 1 to 3 characterized in that all of the layers (32,36,38, 42,44) are arranged at distances to each other.

5. The shell according to claim 4 characterized in that a layer (34,40,46,48) of an elastic material is arranged between each pair of neighbouring layers (32,36,38,42,44).

6. Use of the absorption shell according to any one of claims 1 to 5 for protecting the reactor of a nuclear power plant, characterized in that the layers (32,36,38,42,44) are provided on the inner side of the reactor building (30) and/or on the inner side of the reactor safety container (28) provided within the reactor building, the fourth layer (44) being the innermost layer, respectively.

7. Use of the absorption shell according to any one of claims 1 to 5 for protecting the reactor of a nuclear power plant, characterized in that the layers are integrated into the wall of the reactor building (30) and/or the wall of the reactor safety container (28), the fourth layer (44) being the innermost layer, respectively.

8. Use of the absorption shell according to any one of claims 1 to 5 for the sealing of shut-down nuclear power plants, characterized in that the absorption shell is arranged around the reactor building (30), the fourth layer (44) being arranged on the inner side facing the reactor building (30).

9. Use of the absorption shell according to any one of claims 1 to 5 for the protection of arrangements against radioactive radiation, characterized in that the absorption shell is arranged around the installation to be protected, the fourth layer (44) being arranged on the outer side averted from the arrangement.

## Revendications

1. Enveloppe absorbante pour une source de rayonnement radioactif, en particulier un réacteur nucléaire, avec une première couche (36) pour l'absorption du rayonnement gamma et une seconde couche (38) pour l'absorption du rayonnement neutronique, caractérisée par
- une troisième couche (42) pour l'absorption du rayonnement alpha et béta, et
- une quatrième couche (44) imperméable aux gaz, en un alliage au zirconium, entourant de tous les côtés la source de rayonnement radioactif, destinée à retenir des produits de fission gazeux.

2. Enveloppe suivant la revendication 1, caractérisée en ce que la seconde couche (38) est en hafnium.

3. Enveloppe suivant la revendication 1 ou 2, caractérisée en ce qu'il est prévu une cinquième couche en titane.

4. Enveloppe suivant l'une des revendications 1 à 3, caractérisée en ce que toutes les couches (32, 36, 38, 42, 44) sont disposées distantes l'une par rapport à l'autre.

5. Enveloppe suivant la revendication 4, caractérisée en ce qu'entre des couches adjacentes (32, 36, 38, 42, 44) est chaque fois disposée une couche (34, 40, 46, 48) en un matériau élastique.

6. Utilisation de l'enveloppe absorbante suivant l'une des revendications 1 à 5 pour la protection du réacteur d'une centrale nucléaire, caractérisée en ce que les couches (32, 36, 38, 42, 44) sont disposées sur la face intérieure du bâtiment du réacteur (30) et/ou sur la face intérieure du conteneur de sécurité du réacteur (28) prévu dans celui-ci, la quatrième couche (44) étant chaque fois la plus à l'intérieur.

7. Utilisation de l'enveloppe absorbante suivant l'une des revendications 1 à 5 pour garantir la sécurité du réacteur d'une centrale nucléaire, caractérisée en ce que les couches sont intégrées dans la paroi du bâtiment du réacteur (30) et/ou la paroi du conteneur de sécurité du réacteur (28), la quatrième couche (44) étant chaque fois la plus à l'intérieur.

8. Utilisation de l'enveloppe absorbante suivant l'une des revendications 1 à 5 pour le déchargement de centrales nucléaires arrêtées, caractérisée en ce que l'enveloppe absorbante est placée autour du bâtiment du réacteur (30), la quatrième couche (44) étant disposée sur la face intérieure orientée vers le bâtiment du réacteur (30).

9. Utilisation de l'enveloppe absorbante suivant l'une des revendications 1 à 5 pour la protection d'installations contre le rayonnement radioactif, caractérisée en ce que l'enveloppe absorbante est placée autour de l'installation à protéger, la quatrième couche (44) étant disposée sur la face extérieure orientée en direction opposée à l'installation.
